(19)

Europäisches
Patentamt
European
Patent Office
Office européen
des brevets

(11) **EP 4 593 295 A1**

(12) **EUROPEAN PATENT APPLICATION**

(43) Date of publication:
**30.07.2025 Bulletin 2025/31**

(51) International Patent Classification (IPC):
***H04B 1/10*** *(2006.01)*

(21) Application number: **24153510.3**

(22) Date of filing: **23.01.2024**

(52) Cooperative Patent Classification (CPC):
**H04B 1/1027**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Airbus Defence and Space GmbH
82024 Taufkirchen (DE)**

(72) Inventors:
• **Hadaschik, Niels
82024 Taufkirchen (DE)**
• **Soualle, Francis
82024 Taufkirchen (DE)**

(74) Representative: **KASTEL Patentanwälte PartG
mbB
St.-Cajetan-Straße 41
81669 München (DE)**

(54) **METHOD AND APPARATUS FOR COMPRESSION OF SIGNAL DYNAMIC RANGE OF A
RADIOFREQUENCY (RF) SIGNAL**

(57)    In order to allow for compressing the signal dynamics of a radio frequency (RF) signal (16) that includes a desired signal (18) and an interference signal (20), the invention proposes to sample the RF signal (16) received by one or more antenna elements (14). One of the samples is used as a reference sample and subtracted at each sampling epoch ($t_0$, $t_1$, ...) from the received signal as it is output from each antenna element (14). The reference signal (30) and the subtracted signal are quantized such that the subtracted signal is quantized with a smaller number of quantization bits than the reference signal samples.

FIG. 1

**Description**

The invention relates to a method and apparatus for compression of signal dynamic range.

Liu, Yaohui & Diniz, Paulo & Laakso, Timo. (2001); Adaptive Steiglitz-McBride notch filter design for radio interference suppression in VDSL systems; 1. 359 - 363 vol.1. 10.1109/GLOCOM.2001.965139; discloses using an adaptive (RLS based) notch filter after the ADC for interference mitigation in digital domain. In the VDSL application adapted first order notch filters are used wherein signal covariance information is considered in Wiener or Kalman filter design. A cascade of notch filters is proposed for multiple interferers.

A. Nehorai, "A minimal parameter adaptive notch filter with constrained poles and zeros," IEEE Trans.on ASSP, vol. ASSP-33, no. 4, pp. 983-996, 1985; discloses Gauss-Newton iterations being used to adapt the filter impulse response for a filter for interference suppression (notch filter). It is optimized exploiting and minimizing the prediction error variance applying a recursive gradient computation.

N. Hadaschik and G. Ascheid, "Deriving a Joint Interference Detection and Channel Estimation for WB-OFDM from EM-MAP Theory," 2008 IEEE International Conference on Communications, 2008, pp. 1322-1327, doi: 10.1109/ICC.2008.257; discloses a narrowband interference detection (and removal) in conjunction with a channel estimation for broadband OFDM systems. Therein, the interference is detected and removed by blanking in the time-frequency domain consisting of bins defined by the affected subcarriers and the affected OFDM symbols. The blanking is equivalent to suppressing the interference, i.e. notch filtering interference affected portions of frequency and time. The adapted channel estimation interpolates, then, the channel samples at the positions of the blanked (suppressed) samples and removes the replica of the channel estimate multiplied with the detected signal from the originally received OFDM symbol.

Chang, Wenge & li, Jianyang & Li, Xiangyang. (2009). The Effect of Notch Filter on RFI Suppression. Wireless Sensor Network. 1. 196-205. 10.4236/wsn.2009.13026; discloses radio frequency interference (RFI) suppression for ultra-wideband synthetic aperture radar (UWB SAR) imaging application.

R. T. Lord and M. R. Inggs, "Efficient RFI suppression in SAR using LMS adaptive filter integrated with range/Doppler algorithm," Electronics Letters, Vol. 35 No. 8, pp. 629-630, April 15, 1999; disclose an adaptive filter to estimate the interference with the incoming signal as input. Then, the filter output is subtracted from the incoming signal again. The adaptive filter uses an LMS implementation as frequency domain filter.

El Gebali, A.; Landry, R.J. Single and Multiple Continuous-Wave Interference Suppression Using Adaptive IIR Notch Filters Based on Direct-Form Structure in a QPSK Communication System. Appl. Sci. 2022, 12, 2186. https://doi.org/10.3390/app12042186, disclose an adaptive algorithm for cancelling one or multiple interferers. In contrast to other approaches, the algorithm not only adapts the notch position (i.e. to the instantaneous interferer position), but also the notch depth as a function of the JSR (Jammer to Signal Ratio). A relative notch depth smaller than one does not remove all signal components at the position of the notch, but only a portion. By doing so the amount of signal energy is more efficiently suppressed providing a signal reception with less bit errors. The approach can detect and track interferer frequency changes and can work with weak and strong interference.

Nunzia Giorgia Ferrara, Mohammad Zahidul H. Bhuiyan, Stefan Söderholm, Laura Ruotsalainen, Heidi Kuusniemi, "A new implementation of narrowband interference detection, characterization, and mitigation technique for a software-defined multi-GNSS receiver", GNSS Solutions, vol. 22, 2018, disclose a method for interference detection, estimation and compression, where the relatively high power interferers are detected in the frequency domain i.e. for an explicit carrier frequency. In a next step the interference bandwidth is estimated and the parameters are forwarded to the suppression stage. The interference suppression uses a combination of auto-regressive and moving average filter as notch filter with variable carrier frequency, and width. The technique is then compared to a least mean square (LMS) adaptation strategy. The notch filter only serves for suppression not for compression.

V. L. Do, T. B. Nguyen, V. K. Dao and C. H. Nguyen, "Compression of wideband IQ samples using linear predictive coding and frame of reference," 2017 IEEE 2nd International Conference on Signal and Image Processing (ICSIP), Singapore, 2017, pp. 371-375, doi: 10.1 109/SIPROCESS.2017.8124567, discusses spectrum monitoring applications where radio signals are often sampled at the speed of several hundreds of MHz by high-performance analog-to-digital converters (ADC). These wideband IQ samples are generally stored in hard drives for offline monitoring purposes such as direction finding or position location. In such scenarios, the lossless compression and decompression of wideband IQ samples helps in reducing storage space as well as increasing reading and writing speeds. The document discloses an algorithm for compressing and decompressing wideband IQ samples. The proposed method is based on an elegant combination of the well-known Linear Predictive Coding (LPC) filter and the simple Frame of Reference (FOR) scheme. Experimental results have demonstrated the better performance of the proposed algorithm in compressing and decompressing wideband IQ samples over conventional data compression techniques.

US 6 807 405 B1 discloses a method to suppress multiple interferers by separation in narrowband channels and scanning of the subchannels and detection of interference based on the signal power within each subchannel.

US 6 426 983 B1 discloses excision circuitry for narrowband interference suppression of wideband signals preferably for CDMA like systems. The method separates the signal bandwidth into several subbands. Each of the subbands is examined continuously by investigating the power within the band. The interference in these subbands is then suppressed by notching out the respective frequency part of the user signal suffering from the interference. The user signal is reassembled by a set of filterbanks.

US 6 215 812 B1 discloses suppression of one or more high power RF interferers on a direct sequence spread spectrum signal (DSSS). The interference is removed in RF before it passes through the largest part of the receiver circuitry. The technique intends to support spatial diversity receivers working in parallel on those multiple receiver lines.

US 6 020 783 A discloses a notch filter network, where before each of the successively applied notch filters to the incoming signal, where interference is being detected.

US 5 719 852 A discloses a successive interference canceler that is unsuitable for narrowband signals. The canceler is capable of for cancelling different sequences of the same type of CDMA signals.

US 5 596 600 A discloses an interference canceler for analog RF signals in a receiver, where the signal in converted to baseband, then it is sampled and fed into a recursive adaptive digital filter suppressing the interferer or multiple interferers.

US 4 991 165 A discloses an interference canceler based on a known interfering signal - actually coupled from the interference transmitter itself - that is used to suppress the interference part in the received signal received via the receive antenna.

US 5 325 204 A discloses a narrowband interference cancellation with a recursive digital notch filter that has a focus on acquiring and interference detection and tracking the notch filter characteristics.

US 5 027 123 A discloses an XPIC (cross-polarisation interference canceler) predominantly for radar applications and can be applied on the polar plus the cross-polar branch of the receiver processing.

US 5 051 963 A discloses processing seismic data. A method to compute interfering sinusoids is provided in terms of amplitude and frequency and remove them from the data samples.

US 4 589 083 A discloses a method for estimating sinusoid interference in a wideband signal. To do so, it employs PLL based phase-tracking for the sinusoid at hand as well as for generating an according (squared) sinusoid and an adaptive filtering system delivering an estimate of the sinusoid in frequency, amplitude and phase. The signal is then subtracted from the available data (i.e. it is canceled). The technique is capable of enhancing spectral lines and tracking changing interference parameters.

US 3 967 102 A discloses a system for suppressing interferers with notch filters. In the invention two successive recursive filters of second order are presented. They have the same structure. Both filters are fed with the parameters steering the notch (position) of the filter based on the comparison of the output power difference of both filters with a signal residue power standard for determining if and how the filter parameters have to be adapted.

US 5 058 139 A discloses a system for interference suppression based on an estimate of the sinusoidal interference parameters from the received signal, from which a generator generates a signal that is coupled into the received signal removing the sinusoidal interference from that signal.

US 5 263 048 A discloses a method for excising narrowband interferers in a spread spectrum signal. The received spread spectrum signal is digitized and transforming the digitized and transformed from time domain to frequency domain. In the frequency domain the samples of the frequency domain signal where interference is detected is replaced by a sample with the same phase as the interference contaminated signal but unit magnitude. This changed frequency domain signal is then converted back to time domain to serve as input for further processing.

US 4 287 475 A discloses an FFT based interference detection and parameter estimation. Afterwards a generated estimate of the signal is subtracted the narrowband signal from a delayed version of the input signals.

US 8 725 784 B2 discloses a compressive domain data sampling method and the suppression of detected interferers in the compressive domain. The approach is based on transforming the data into a signal subspace orthogonal to the interference of the compressive samples.

US 8 259 003 B2 discloses a radar system with pulse compression that is usually applied in order to reduce the processing burden in terms of the sample rate in the successive digital processing. A method of suppressing inter-pulse (respectively near-far) interference from signal sidelobes between incoming signals is described, which has to be performed before the pulse compression. The suppression is based on weighting the undesired pulse in the processing of other pulse. Processing can be performed in the frequency domain.

US 9 998 190 B2 discloses an interference mitigation for a MIMO system in a wireless network with relays amplifying, compressing and forwarding communication between the mobile device (destination terminal) and the network. The relay itself as considered in the patent is an assisting mobile device itself that is in the relatively close vicinity of the assisted mobile device (destination terminal), i.e. both mobile devices are of the same type.

US 8 150 345 B2 discloses interference suppression for signals from multiple receive antennas based on the inverse of the spatial correlation matrix of the interference using the eigenvalue decomposition of the covariance matrix.

US 9 509 427 B2 discloses adaptive filters to spatially suppress interference in the received signal of a multiple antenna receiver of a mobile device. To do so it trains the adaptive filter based on known training sequences transmitted by the network (e.g. the PSS in LTE or 5G), i.e. in the desired signal.

US 10 348 474 B2 discloses a method that coordinates network devices.

US 10 057 001 B2 discloses suppresing a radio interference on a multiple antenna system by processing the samples from the respective chain for each antenna element individually using a filter in time domain (or frequency domain), but with jointly adapted filter coefficients between the chains, which represents a spatial optimization.

US 8 254 845 B2 discloses a method for optimizing the beamforming weights of a multiple antenna system, where, on the one hand, spatial nulls are put in the direction of the interferers and maxima of the array characteristics are directed to the direction of the incoming paths of the desired signal.

US 5 384 598 A discloses a method where differential frames are used for compressed transmission of data.

US 4 858 004 A discloses time compressed integration (TCI) separating the chrominance signal of imaging into a narrowband and a wideband signal.

US 5 764 294 A discloses to use two differential color signals (chrominance) that are used for coding (in a compressed manner) based on DCT and for detecting motions.

US 5 343 539 A discloses a differential intensity coding for the pixels within a spatial block (group) for compression and decompression.

US 8 238 677 B2 discloses images to be compressed in data using spatial differences of multiple neighboring data pixels based on data mapping using look-up tables, rotating, partitioning the data.

US 2003 / 0 099 397 A1 discloses measures, where differencing is used for finding jointly coded regions, objects, and contours for later use in image compression and is, thus a bit off-topic considering direct differential compression.

US 6 215 825 B1 discloses a stereoscopic image compression. The scheme is based on exploiting differences between the images of a first and a second camera of the same scheme and at the same time.

US 8 818 102 B2 discloses a method for differencing image data at the same time in spectral, temporal and spatial domain.

US 5 490 221 A discloses exploitation of the spectral and spatial correlation where the difference of the new image is compared to a predicted image from a three-dimensional model of the depicted object.

It is the object of the invention to provide measures that allow a reduction in required network bandwidth with a minimum impact on the signal that is preferably statistically more efficient.

The object is achieved by the subject-matter of the independent claims. Preferred embodiments are subject-matter of the dependent claims.

Within the invention we are using the following definitions:

A dominant interference component is an interference component concentrating most of the signal energy of the full signal.

A dominant signal component is a (desired) signal component that concentrates most of the signal energy of the full signal.

The signal dynamic range is the range between the minimum resolvable amplitude and the maximum displayable amplitude of a signal.

A sampled signal is a discrete quantized signal that is ideally supporting the complete dynamic range of the signal allowing for detecting the weakest and the strongest signals with negligible losses and distortions.

The sample word width is the number of bits required for sufficiently quantizing the signal with negligible losses and distortions.

A remote radio head (RRH) is a device receiving radio signals and providing only basic preprocessing before forwarding the signal in IF or baseband to a remote processing computer for further (baseband) processing.

A remote central processing facility (R-CPF) is defined by a significant spatial separation to the device receiving the signal to be processed e.g. from a RRH. It comprises at least a reception unit for receiving the signal samples, a (baseband) processing unit for the received signal samples and an output of products obtained from processing the received signal samples. In general, the R-CPF includes a remote processing computer that is capable of performing the methods described herein.

The invention provides a method for compressing signal dynamic range of a radio frequency (RF) signal that includes a desired signal and an interference signal, the method comprising:

a) receiving the RF signal with at least one antenna element, each antenna element outputting a received signal, wherein preferably a reference signal is based on the received signal;

b) sampling the received signal to obtain a plurality of samples for each antenna element, wherein each sample is associated with a sampling epoch and at least one sample is designated a reference signal sample of the reference signal;

c) preprocessing the received signal and/or the samples and the reference signal and/or the reference signal sample in order to extract ancillary information that is configured to allow at least approximate signal reconstruction of the received signal;

d) at each sampling epoch subtracting the reference signal sample from the received signal sample as it is output from each antenna element to obtain a subtracted signal sample of a subtracted signal;
e) re-quantizing the results of step d).

Preferably, in step c) the ancillary information includes any of carrier phase information, carrier frequency information and/or carrier amplitude information.

Preferably, step e) causes the subtracted signal to have a smaller signal dynamic range than the received signal and/or the reference signal. Preferably, the subtracted signal is quantized with a smaller number of quantization bits than the received signal and/or the reference signal.

Preferably, the received signal is used in a first iteration of the method where a first interference signal is removed. Preferably, the reference signal is used for a second and possible subsequent iterations of the method where a second and possible subsequent interference signals are removed.

Preferably, the method comprises:
f) transmitting the output of step e) to a remote processing computer for reconstruction and/or further processing.

Preferably, step a) comprises detecting whether the interference signal is present and upon determining the presence of the interference signal, performing step c) to e), otherwise transmitting the sampled signal to the remote processing computer.

The signal dynamic range typically designates the range the sample values span from their minimum (typically a negative number) to their maximum (typically positive number).

The known solutions typically increase the number of bits to eventually ensure full quantization of the received signal containing high power RFI signals. However, the RFI signals are typically a statistical phenomenon, which usually appears only from time to time. Preferably, the reference signal sample is an output signal sample of one of the antenna elements measured at the same sampling epoch. Preferably, the reference signal sample is a combination of output signal samples obtained from the antenna elements measured at the same sampling epoch. Preferably, the reference signal sample is an output signal sample of the same antenna element measured at a past epoch. Preferably, the reference signal sample is a combination of output signal samples obtained from the antenna elements and measured at a past epoch.

Preferably, before step d) the average carrier phase offset between a dominant interference component of the reference signal sample stream and the sample stream to be compressed is estimated and/or compensated. Preferably, in step f) the applied average carrier phase offset is transmitted to the remote processing computer as part of the ancillary information, such as the carrier phase information, for purposes of signal reconstruction.

Preferably, before step d) the temporally varying carrier phase offset between interference components of the reference sample stream and the sample stream to be compressed is tracked and/or compensated. Preferably, in step f) the applied temporally varying carrier phase offset is transmitted, preferably at a reduced rate, to the remote processing computer as part of the ancillary information, such as the carrier phase information, for purposes of signal reconstruction.

Preferably, before step d) the received signal is transformed as to convert the interference component into baseband by estimating the carrier frequency offset of the dominant interferer and compensating the dominant interference component in the samples. Preferably, in step f) the applied carrier frequency offset of the dominant interferer is transmitted to the remote processing computer as part of the ancillary information, such as the carrier frequency information, for purposes of signal reconstruction.

Preferably, before step d) the average carrier amplitude of the dominant interference component of the interference signal (20) included in the reference signal samples is estimated and compensated. Preferably, in step f), the applied average carrier amplitude of the dominant interferer is transmitted to the remote processing computer as part of the ancillary information, such as the carrier amplitude information, for purposes of signal reconstruction.

Preferably, gain and time offsets of analog processing chains are compensated before other compensations or first.

Preferably, before subtraction the signal is transformed as to convert the interference component into baseband by tracking and/or estimating a time carrier frequency offset of the dominant interferer and compensating the dominant interferer in the samples. Preferably, the estimated and/or applied carrier frequency offset of the dominant interferer is transmitted to the remote processing computer as part of the ancillary information, such as the carrier frequency information, at a lower sample rate for purposes of signal reconstruction.

Preferably, inherently the compression is achieved by applying an equivalent notch filter, preferably a frequency-adaptive notch filter, considering the carrier frequency offset.

Preferably, the interference signal is compensated by applying the steps b) to e) successively for neighboring frequency bins covering the total interference bandwidth.

Preferably, the method is applied iteratively in presence of multiple powerful signals, e.g., powerful interference signals, successively removing each signal component.

Preferably, the reduction of the number of bits is time variant. Preferably, the notch filter is a first order notch filter. Preferably, the notch filter is a second order notch filter.

Preferably, the method further comprises g) tracking the power of the difference between two signal streams from different antenna elements after compensating the average carrier phase offset for detecting interference using a threshold value for this power.

Preferably, the threshold value for the power detector is determined adaptively from past observations of the signal/noise level.

Preferably, the reference signal samples are compressed, and in addition the interference carrier frequency/-phase offset is transmitted, wherein preferably reconstruction starts with the reference signal samples being the basis for reconstructing the other non-reference signal samples, which are defined as the samples of the received signal which are not the reference signal samples.

Preferably, the reference signal samples are compressed, and in addition the carrier phase offset is transmitted, wherein preferably the reconstruction starts with the reference signal samples being the basis for reconstructing the other non-reference signal samples.

Preferably, the reference signal is applied successively in a daisy chain manner with each following sample stream from one antenna serves as reference for the following one.

The invention provides a method for at least approximately reconstructing an RF signal whose signal dynamic range was compressed according to a method according to any of the preceding claims, the method comprising:

a) receiving a compressed signal comprising at least one reference signal sample, a plurality of subtracted signal samples associated with that reference signal sample, and ancillary information;
b) for each sampling epoch, adding to the reference signal sample an accumulated sum of the subtracted signal samples up to the respective sampling epoch;
c) outputting the results of step b) as the reconstructed signal.

Preferably, the compressed signal is organized as a plurality of groups of sampling epochs, each group comprising one reference signal sample, as an initial sample, wherein in step b), for each group of sampling epochs, the addition is performed based on the respective initial sample and the subtracted signal samples associated with that group.

The invention provides a data processing apparatus comprising means for carrying out the method.

The invention provides a signal processing circuit comprising electronic components that are arranged and connected to perform the method.

The invention provides a computer program comprising instructions which, when the program is executed by a computer cause the computer to carry out the method.

The invention provides a computer readable medium or data carrier signal that comprises the computer program.

The underlying concept is meant to reduce the data rate for the transmission of sampled radio signals (preferably at baseband) from a remote radio head (RRH) device for the reception of the radio signal to a centralized processing device (e.g., a base station or a remote central processing facility). The remote radio head typically comprises an antenna receiving the RF signals, an analog radio front-end amplifying and passband filtering the signal as well as converting the signal to baseband (BB) or intermediate frequency (IF), an analog to digital converter for sampling the BB or IF signal as well as a limited baseband processor and transmit protocol endpoint preparing the data for transmission over a network.

In a preferred embodiment, the antenna can be implemented as an antenna array. The front-end may be realized as a coherent multichannel front-end with one received channel per antenna element. A multichannel ADC may be used for coherently sampling the signals from the channels. Via electrical or optical network and a network protocol specialized for high data rates (e.g. CPRI or VITA/DIFI) the data may be transmitted from the RRH node to the base station or centralized processing facility.

The base station can serve multiple RRHs in the close to medium vicinity of the base station - typically in ten meter to several hundred meter distance. The base station preferably performs the BB processing of the signals and extracts the desired service data from them. Afterwards, it is connected via a core (backbone) network to other network devices (other base stations or servers) further distributing and processing the data. They may, e.g., apply the data in communication or location services, produce warnings or visualize data.

The alternative remote centralized processing facility (R-CPF) can receive the data from multiple medium to far distant RRHs. R-CPF and RRHs are typically separated by some hundreds of meters to several hundred kilometers. The R-CPF preferably provides the endpoint for the network protocol, may apply baseband processing on the data from the diverse RRHs jointly or in separate processing instances for all RRH signals. Additionally, the R-CPF may apply further application specific processing of the data before forwarding extracted information to other servers or clients for further use in services, generating warnings or visualizing the results. The R-CPF may also be implemented as a cloud service, where, then, the protocol endpoint and the full processing is executed in the cloud.

The radio transmissions are supposed to be wideband transmissions e.g. using modulations such as Code Division Multiple Access (CDMA), Multicarrier CDMA (MC-CDMA), Single Carrier Frequency Division Multiple Access (SC-FDMA), Chirp Spread Spectrum (CSS) or Orthogonal Frequency Division Multiplexing (OFDM). They are supposed to be transmitted from a (very distant) transmitter and may, thus, be received with weak power. In the case of CDMA, the received power of the signals may well be below the noise level.

The radio signals may (or may not) suffer from relatively narrowband interferers. "Relatively narrowband" considers the interferer bandwidth in comparison to the full receiving bandwidth of the system (or the sampling rate of the receiver). An interferer radiates uncooperatively and uncoordinatedly a secondary signal that may distort the reception of the desired primary signal. In this context, a jammer may also be considered as an interferer (but may be coordinated with the signal) that is however transmitting radio secondary signals to maliciously distort or totally hinder the service provided by the radio signals.

As the interferers are usually much closer to the receiving RRH, their signal is often much stronger than that of the desired primary signal or the noise. For instance, the interfering signal power may be 10 dB or 20 dB stronger than the desired primary signal power or in the context of CDMA the noise. This would usually require to increase the number of bits per sample by at least 2 bit up to 4 bits in order to avoid distortions due to clipping effects for example.

One of the main challenges of such a system is the high data rate required to send the sampled BB data from the remote radio head to the base station or R-CPF. This typically requires a high rate data network. The data rate results from the number of sample streams (e.g. the number of antenna elements), the sampling bandwidth (classically lower bounded by the bandwidth of the primary radio signal) multiplied by the number of bits used to quantize the service.

The number of antenna elements is typically from one to 16 (although implementations with up to more than 100 elements can be achieved), the bandwidth of the radio signals is preferably from 5 MHz to 100 MHz (or even higher), the number of bits per sample strongly depends on the application. It is well known that e.g. for global navigation satellite system (GNSS) applications the 2 bit to 3 bit are sufficient to further process the signals with little loss, while, e.g., in OFDM communications much higher number of bits is typically considered.

As an example, a system with $M = 8$ antennas, IQ (i.e. complex) sampling, a bandwidth of $BW = 50$ MHz and 3 bit per symbols requires $8 \times 2 \times$

$$50 \frac{sample}{s} \times 3 \frac{bit}{sample} = 2.4 \frac{GBit}{s} = 300 \frac{MByte}{s}$$

. This represents the high data rate for a primary signal without interference required for decoding the data.

If the desired primary signal suffers from an interfering signal, the 3 bit quantization may become insufficient as the interference adds much more dynamics in the amplitude to the system required to still have sufficient quantization for the much weaker primary signal. Easily 8 to 10 bit may be required in GNSS applications. Accordingly, in the upper example with interference

$$8 \times 2 \times 50 \frac{sample}{s} \times 10 \frac{bit}{sample} = 8 \frac{GBit}{s} = 1 \frac{GByte}{s}$$

, yielding thus involving a increase of 70% of required data rate

In any way, it is advisable to reduce the required data rate in order to save cost with respect to devices (network cards), protocol processing and potentially rented network bandwidth, but especially for the described case of a required word width extension for signals suffering from interference, the reduction of the bit rate is important.

Techniques comprise interference detection with flexible network bandwidth, where the word width of the samples in bits is extended if and only if strong interference has been detected. Due to this extension of the word width, the resulting data rate in bit per seconds rises strongly.

Under the assumption that the presence of an interferer is the special case and no detectable interference is the general case, the adaptive sample word width reduces already the average data rate significantly. However, this a reduction is not achieved with respect to the peak data rate, i.e., in the presence of detected interference, and this peak data rate needs to be accounted for the design and selection of the network for real-time transmission.

Other techniques consider spatial notching consisting in nullsteering in the direction of the interferer (relatively high implementation effort and processing complexity), or spectral notch filtering narrowband interference (causing a loss of signal energy and adding variations of the group delay), or interference cancellation techniques, where the interference signal is first estimated and, then, subtracted from the sum signal of desired signal, noise and interference (high implementation and estimation effort).

The main motivation of this invention is to provide a simple processing with simple implementation requiring few resources in order to limit the required network bandwidth with a minimum of impact on the signal with the purpose of enabling the central processor to do any kind of processing after reconstruction of the original signal, e.g., mitigating the interference impact on the desired signal or mitigating multi-path signal(s). Given the high computational power, a central processing can do any such kind of processing enabling the best feasible result.

The main advantage of the methods and devices presented herein is a significant reduction of the peak data rate from a remote radio head to central baseband processing unit at a very affordable hardware and software complexity.

To do so, the concept is to reduce the signal dynamic range required for the transmission of the desired signal making a lower number of bits per sample to be transmitted to the central baseband processing unit and still allowing reducing the signal reconstruction error to a level acceptable for the end-application.

In contrast to all aforementioned interference mitigation techniques, the signal (including the interference) can be reconstructed/decompressed in the central baseband processing unit or any other consumer of the data.

The technique enables the central baseband processing unit to apply any suitable signal processing (e.g. for suppressing the interference and/or receiver beamforming to the transmitter) that is desired and required without alteration of the signal characteristics (e.g. distortion of the group delay due to notch filtering).

Embodiments of the invention are described in more detail with reference to the accompanying schematic drawings that are listed below

Fig. 1 depicts a first embodiment of a receiver circuit with temporal differencing technique;
Fig. 2 depicts a time-signal diagram explaining the temporal differencing technique;
Fig. 3 depicts a second embodiment of a receiver circuit with temporal differencing technique; and
Fig. 4 depicts a third embodiment of a receiver circuit with spatial differencing technique.

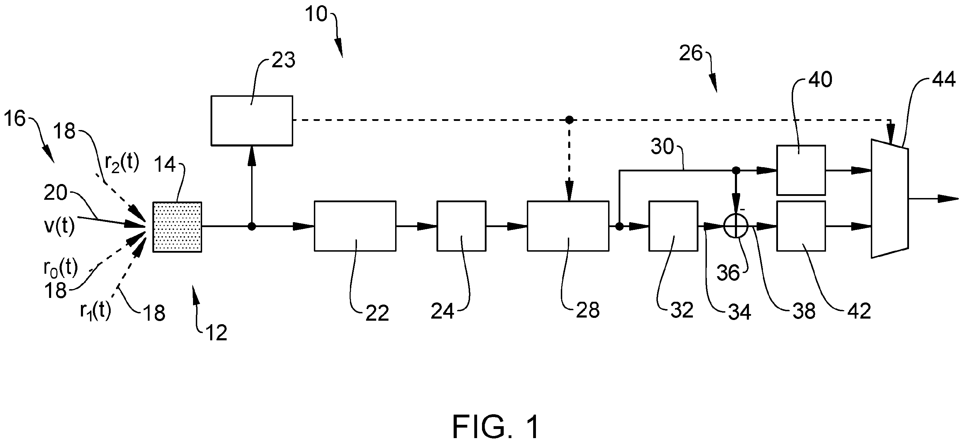

Referring to Fig. 1, first embodiment of a receiver apparatus 10 includes an antenna apparatus 12. The antenna apparatus 12 has one antenna element 14. The antenna element 14 is configured to receive a radio frequency (RF) signal 16. The RF signal 16 includes a desired signal 18. The desired signal 18 may be a signal from a global navigation satellite system (GNSS). The desired signal 18 typically has a signal power below the noise level.

The RF signal 16 may include an interference signal 20. The interference signal 20 is generally a terrestrial signal and typically has a signal power much greater than the desired signal 18. Typically, the difference is about 10 dB to 20 dB. In other words, the interference signal 20 is typically 10 to 100 times more powerful than the desired signal 18. The interference signal 20 is not necessarily present all the time but may be present only occasionally. The interference signal 20 typically has a narrower bandwidth than the desired signal 18.

The receiver apparatus 10 includes an RF front end (RFE) 22. The RFE 22 includes the components necessary for processing and converting the RF signal 16 down to a lower intermediate or base-band frequency. In this embodiment a digital receiver is used and the RFE 22 includes the components up to, but not including the analog-to-digital converter (ADC) 24. The ADC 24 is configured to sample the down converted RF signal 16 for further processing. In the usual manner, the ADC 24 outputs a sample stream that represents the RF signal 16.

The receiver apparatus 10 includes an RF interference (RFI) detector 23. The RFI detector 23 is directly connected to the antenna element 14 to receive the RF signal 16. The RFI detector 23 is configured to detect, whether an interference signal 20 is present. Interference detection methods are well-known and therefore not described further. In this example, the interference signal 20 may be simply detected due to its much larger signal power compared to the desired signal 18. In other words, if the RF signal 16 is determined to have a component that is above the noise level or has a component that is a predetermined power above the noise level, it is assumed that this dominant signal component is the interference signal 20.

The receiver apparatus 10 includes a compression means 26. The compression means 26 in this embodiment is configured as a temporal compression means.

The compression means 26 comprises an RFI carrier compensator 28. The RFI carrier compensator 28 is configured to estimate an RFI center frequency using, for example, the method according to M. P. Fitz, "Planar filtered techniques for burst mode carrier synchronization," in Proc. of IEEE GLOBECOM '91, Phoenix, AZ., 1991), Luise-Reggianini (M. Luise and R. Reggiannini, "Carrier frequency recovery in all-digital modems for burst-mode transmissions", IEEE Trans. on Communications, vol. 43, no. 2/3/4, pp. 1169-1178, 1995.), or Mengali-Morrelli (U. Mengali & M. Morelli. "Data-aided frequency estimation for burst digital transmission.", IEEE Transactions on Communications, vol. 45, pp. 23 - 25, 1997.). The RFI carrier compensator 28 outputs a reference signal 30 that is composed of reference signal samples.

The compression means 26 comprises a delay means 32 that is coupled to the output of the RFI carrier compensator 28. The delay means 32 delays its input signal by a predetermined amount of time and outputs a delayed signal 34 composed of delay signal samples. The delay means 32 is preferably set to delay its input by one sampling epoch.

The compression means 26 comprises a subtraction means 36. The subtraction means 36 is coupled to the RFI carrier compensator 28 and the delay means 32. The subtraction means 36 is configured to subtract the delayed signal 34 from the output of the RFI carrier compensator 28. The subtraction means 36 outputs a subtracted signal 38 composed of subtracted signal samples.

The compression means 26 comprises a high-resolution quantization means 40 that is fed with the reference signal 30. The high-resolution quantization means 40 quantizes the reference signal 30 with a predetermined number $q$ of bits, e.g. $q = 8$ bits.

The compression means 26 comprises a low-resolution quantization means 42 that is fed with the subtracted signal 38. The low-resolution quantization means 42 quantizes the subtracted signal 38 using a lower number of bits than the high-resolution quantization means 40. The low-resolution quantization means 42 typically has a number of $(q - p)$ bits, where $0 < p < q$. The number $p$ of bit reduction may depend on the power or presence of the interference signal 20, and $p$ is preferably 3, 4, or 5. In other words, the preferred number (q - p) of bits for the low-resolution quantization is 5, 4 or 3, respectively.

The compression means 26 comprises an output means 44. The output means 44 may include a multiplexing circuit and receives the outputs of the high- and low-resolution quantization means 40, 42 and passes on a multiplexed output signal for further processing.

For purposes of reconstruction, any information that was used in generating the subtracted signal 38 is also included in the output signal, such as the information determined by the RFI carrier compensator 28.

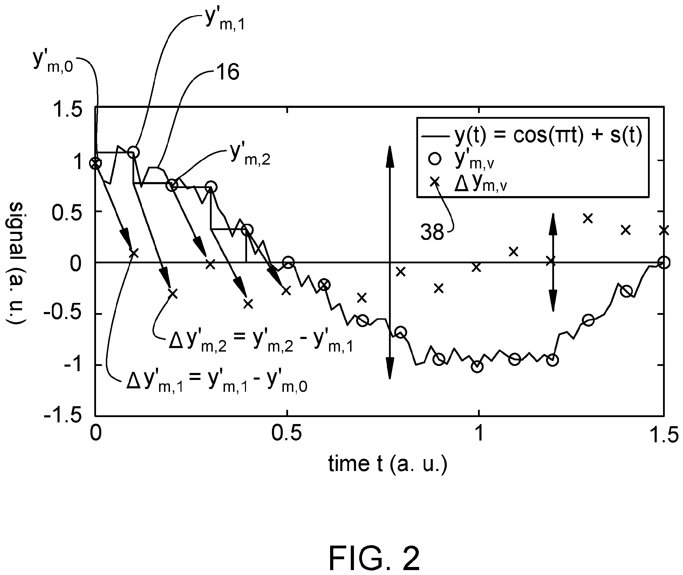

Referring to Fig. 2, the temporal compression process is described. The RF signal 16 is sampled by the ADC 24 at different points in time $t_0$, $t_1$, ... that are spaced apart by sampling time T. Each sample (depicted as a circle) can be designated by y(t), where t corresponds to the points in time $t_0$, $t_1$, ... It is useful characterizing the points in time by the amount of sampling time that has passed: $t_0 = 0$, $t_1 = 1T$, $t_2 = 2T$, ... Each of these points in time is preferably called a sampling epoch.

The comparatively broadband desired signal 18 is for example a GNSS signal that is transmitted using CDMA modulation. The desired signal 18 is superposed with a narrowband interference signal 20. In this context, narrowband means a signal that is sufficiently characterizable by a carrier frequency $f_{RFI}$.

In the following the signals and related processing steps, are expressed with analogue and continuous notations for simplification (e.g. x(t) in place of x[k] where k represents the sample epoch and x has been quantized). This simplification however does not modify the reasoning and main outcomes of the following derivations. The sampled signal can be described as y(t) = r(t) + v(t) + w(t), where r(t) represents the sampled desired signal 18, v(t) represents the sampled interference signal 20, and w(t) represents a sampled general noise signal that is continuously present. The interference signal 20 can be described as v(t) = A · exp(j ·( $2\pi$ · $f_{RFI}$ · t+$\varphi_{RFI}$ ) ), where $f_{RFI}$ is the carrier frequency, and $\varphi_{RFI}$ is the instantaneous carrier phase offset of the interference signal at reception.

The sampled RF signal 16 is fed to the RFI carrier compensator 28 that estimates the carrier frequency $f_{RFI}$. The estimated carrier frequency is designated $\widehat{f_{RFI}}$. The sampled RF signal 16 is offset based on the estimated carrier frequency $\widehat{f_{RFI}}$ by the RFI carrier compensator 28 according to the following equation:

$$\left[A \cdot \exp\!\big(j(2\pi f_{RFI}t + \varphi_{RFI})\big) + w(t) + r(t)\right] \times \exp\!\big(-j2\pi\widehat{f_{RFI}}t\big)$$

Since the carrier frequency and the estimated carrier frequency are - per definition of an estimator in a reasonable scenario - essentially the same, the result is approximately:

$$A \cdot \exp\!\big(j\varphi_{RFI}\big) + [w(t) + r(t)] \times \exp\!\big(-j2\pi\widehat{f_{RFI}}t\big)$$

In a second step, the RFI carrier compensator 28 estimates the amplitude A based on the first sample or a previous sample. The estimated amplitude is designated Â and the estimated carrier phase offset. $\widehat{\varphi_{RFI}}$. In this case the estimated amplitude Â is the amplitude of the previous sample as well as $\widehat{\varphi_{RFI}}$ is the carrier phase offset of the previous signal. The estimated complex amplitude Â · $\exp\!\big(j\widehat{\varphi_{RFI}}\big)$ is subtracted by the subtraction means 36 according to:

$$A \cdot \exp\!\big(j\varphi_{RFI}\big) + [w(t) + r(t)] \times \exp\!\big(-j2\pi\widehat{f_{RFI}}t\big) - \widehat{A} \cdot \exp\!\big(j\widehat{\varphi_{RFI}}\big)$$

The estimated amplitude and the true amplitude are substantially the same such that the final signal results in the subtracted signal 38:

$$[w(t) + r(t)] \times \exp\!\big(-j2\pi\Delta\widehat{f_{RFI}}t\big).$$

This signal has a significantly decreased signal dynamic as the sampled desired signal 18 and the noise signal have much smaller power whose magnitude varies little over time.

In a high interference power to noise power ratio, an efficient estimate for the amplitude and carrier phase offset is the previous sample (after carrier compensation). This feature can be exploited in the current embodiment or the following second and third embodiments based on phase array.

The output of the RFI carrier compensator 28 is directly fed to the high-resolution quantization means 40 and the subtracted signal 38 is directly fed to the low-resolution quantization means 42.

Their respective outputs are fed to the output means 44 that is a multiplexer. The output means 44 multiplexes the quantized outputs such that at least (and preferably only) the first sample $y_{m,0}'$ is transmitted with full precision and the ($N_{init}$-1) remaining samples $\Delta y_{m,1}', \Delta y_{m,2}', \ldots, \Delta y_{m,(N_{init}-1)}'$ (sampled with T as sampling interval) are transmitted with the reduced precision. m indicates here the index of the antenna element, which reduces to m=1. The output means 44 may be designated as the compressed signal.

Subsequently the reconstruction of the input signal from the compressed signal is described. The reconstruction basically works by accumulating the first and all other previous samples according to $\hat{y}_{m,n}' = y_{m,0}' + \sum_{v=1}^{n} \Delta y_{m,v}'$, where $\hat{y}_{m,n}'$ is the reconstructed signal at time $t_n$, $y_{m,0}'$ is the first sample with full precision and the $\Delta y_v'$ are the samples with low precision that are summed up to time $t_n$. This is called accumulative reconstruction.

Numerically, this may lead to accumulating reconstruction errors because of the limited number of bits per difference sample $\Delta y_v'$ and rounding especially for longer window lengths and in the case of aggressive reduction bit per sample. Thus, the differencing is preferably re-initialized by transmitting a full precision sample in a period $N_{init}$ that is smaller than the total observation window $N = f_s T_{interval}$ with the sampling rate $f_s$ and an observed time interval $T_{interval}$.

Preferably, $N_{init}$ is selected to fit D times in the complete interval N with an integer D = $N/N_{init}$. The length of the frequency estimation window $N_f$ will be usually larger than $N_{init}$ in order to grant a sufficiently accurate estimate. Additionally, in order to minimize accumulating errors, preferably the reduction of the word width $p < q$ in bits should allow some margin (e.g., without interference 3 bit quantisation is used, then 4 bit quantisation is used for the subtracted signal). However, the additional bits of margin shall be dimensioned to still guarantee advantage of the proposed method based on transmission of absolute quantized reference samples coded on full word width and difference samples coded on smaller word width (including the margin), when compared to common methods based on the transmission of absolute desired signal coded completely on full word width.

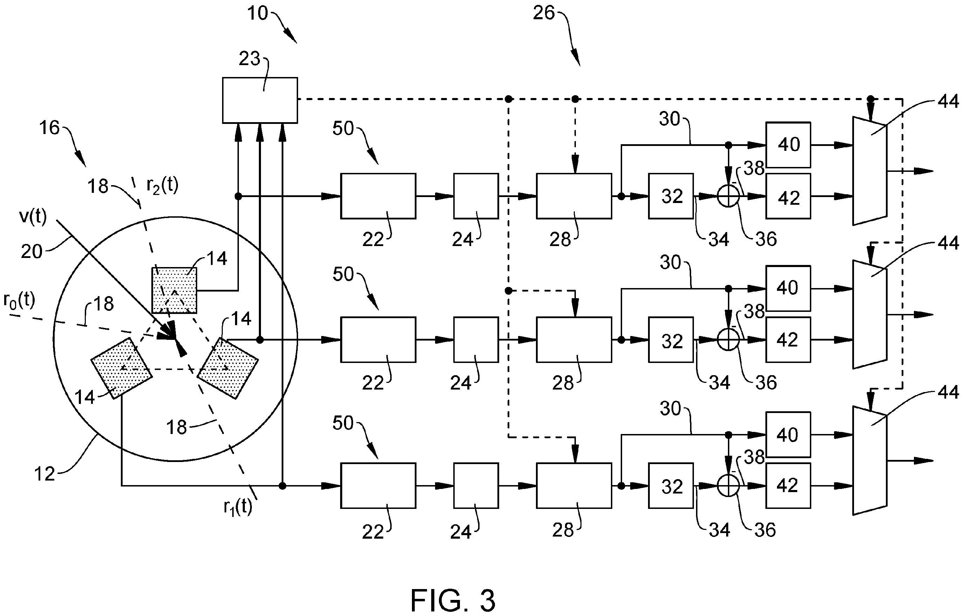

Referring to Fig. 3, a second embodiment of a receiver apparatus 10 is described for temporal compression. The receiver apparatus 10 is only described insofar as it differs from the previously described embodiments. The receiver apparatus 10 includes an antenna apparatus 12. The antenna apparatus 12 has a plurality of antenna elements 14, e.g., two or more. The receiver apparatus 10 has a branch 50 for each antenna element 14. Each branch 50 is configured like the single branch of the first embodiment and also functions substantially the same. The second embodiment re-use the same concept as the first one, i.e. with a temporal compression with the exception that the received signals and therefore signal samples originate from the antenna apparatus, i,e., the array, rather than a single antenna element as for the first embodiment.

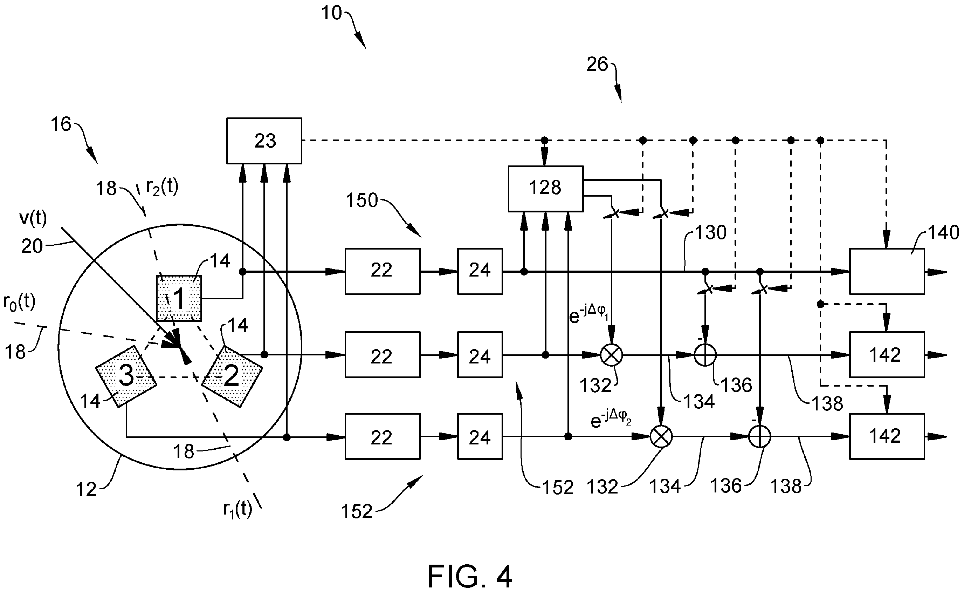

Referring to Fig. 4, a third embodiment of a receiver apparatus 10 is described. It should be noted that in particular the third embodiment does not require the interferer to be of narrow bandwidth.

The receiver apparatus 10 includes an antenna apparatus 12. The antenna apparatus 12 has a plurality of antenna elements 14, e.g. two or more. Each antenna element 14 is configured to receive a radio frequency (RF) signal 16. The RF signal 16 includes a desired signal 18. The desired signal 18 may be a signal from a GNSS. The desired signal 18 typically has a signal power below the noise level.

The RF signal 16 may include an interference signal 20. The interference signal 20 is generally a terrestrial signal and typically has a signal power much greater than the desired signal 18. Typically, the difference is about 10 dB to 20 dB. In other words, the interference signal 20 is typically 10 times to 100 times more powerful than the desired signal 18. The interference signal 20 is not necessarily present all the time but may be present only occasionally. The interference signal 20 typically has a narrower bandwidth than the desired signal 18.

The receiver apparatus 10 includes an RFE 22 for each antenna element 14. The RFE 22 includes the components necessary for processing and converting the RF signal 16 down to a lower intermediate or base-band frequency. In this embodiment a digital receiver is used and the RFE 22 includes the components up to but not including the analog-to-digital converter (ADC) 24. The receiver apparatus 10 includes an ADC 24 for each antenna element 14. Each ADC 24 is configured to digitize the down-converted RF signal 16 for further processing to obtain signal samples.

The receiver apparatus 10 includes an RF interference (RFI) detector 23. The RFI detector 23 is directly connected to each antenna element 14 to receive the RF signal 16. The RFI detector 23 is configured to detect, whether an interference signal 20 is present. Interference detection methods are well-known and therefore not described further. In this example, the interference signal 20 may be simply detected due to its much larger power compared to the desired signal 18. In other words, if the RF signal 16 is determined to have a component that is above the noise level or has a component that is a predetermined power above the noise level, it is assumed that this dominant signal component is the interference signal 20.

The receiver apparatus 10 includes a compression means 26. The compression means 26 in this embodiment is configured as a spatial compression means.

The compression means 26 comprises phase difference estimator 128. The phase difference estimator 128 is configured to estimate a phase difference between a reference signal 130 composed of reference signal samples and other non-reference signals each one composed of non-reference signal samples. The phase difference estimator 128 is coupled to each ADC 24. A first branch 150 that is associated with one of the antenna elements 14 is taken as the reference signal 130. This branch can be taken arbitrarily between all branches. For the further branches 152 the phase difference estimators 128 estimate the phase difference, $\Delta\varphi_m$, of the signal of the further branch 152 at hand with the reference signal 130, and where the subscript m indicates the index of the further branch m.

The compression means 26 comprises a multiplication means 132 that is coupled to the output of the phase difference estimator 128 for each further branch 152.

The multiplication means 132 applies a complex exponential of the phase differences $\exp(-j\Delta\varphi_1)$ and $\exp(-j\Delta\varphi_2)$ based on the corresponding phase difference value to each of the further branches 152. The phase differences are applied in opposite direction to the respective input signal and the multiplication means 132 outputs a phase shifted signal 134, in order to wipe-off the true phase difference between the reference signal 130 and the signal contained in each further branch 152.

The compression means 26 comprises a subtraction means 136. The subtraction means 136 is coupled to reference signal 130 and to the multiplication means 132. The subtraction means 136 is configured to subtract the reference signal 130 from the respective phase shifted signal 134. The subtraction circuit 136 outputs a subtracted signal 138.

In an alternative implementation a phase shifted reference signal 130, obtained by applying a phase rotation of $-\Delta\varphi_m$ prior to the subtraction means 136, is subtracted from the unaltered signal on each of the further branches 152.

The compression means 26 also comprises a dual-resolution quantization means 140 and means 142. The dual-resolution quantization means 140 comprises a high-resolution part that is fed with the reference signal 130. The high-resolution part quantizes the reference signal 130 with a predetermined number q of bits whereas the low-resolution part quantizes with a predetermined number of q - p bits that is smaller than q. Preferably, q equals 8 bits.

The dual-resolution quantization means 140 also comprises a low-resolution quantization means 142 for each further branch 152 that is fed with the subtracted signal 138. The low-resolution quantization means 142 quantizes the subtracted signal 138 using a lower number of bits, q-p, than the high-resolution part of dual-resolution quantization means 140 and preferably the same number of bits as the low-resolution part. The low-resolution quantization means 142 typically has a number of (q - p) bits, where 0 < p < q. The number p may depend on the power or presence of the interference signal 20, and is e.g. p = 3, 4, or 5.

The compression means 26 comprises an output means (not shown). The output means provides the quantized signals for further processing in the remote facility. Similar to the previous embodiments, the output means additionally transmits information used in the compression, such as the phase shift, for the purposes of reconstruction.

The compression means 26 as described above is able to compensate one interference signal 20. It is possible to modify the receiver apparatus 10 for more than one interference signal 20. Preferably, for each interference signal 20 there is another further branch 152 associated with another antenna element 14 as reference.

The reference signals as resulting from the second or the third embodiment may be compressed with the respective other embodiment for a further reduction of the total bit rate.

**List of reference signs:**

| | |
|---|---|
| 10 | receiver apparatus |
| 12 | antenna apparatus |
| 14 | antenna element |
| 16 | radio frequency (RF) signal |
| 18 | desired signal |
| 20 | interference signal |
| 22 | RF front end (RFE) |
| 23 | RF interference (RFI) detector |
| 24 | analog-to-digital converter (ADC) |
| 26 | compression means |

| 28 | RFI carrier compensator |
| --- | --- |
| 30 | reference signal |
| 32 | delay means |
| 34 | delayed signal |
| 36 | subtraction means |
| 38 | subtracted signal |
| 40 | high-resolution quantization means |
| 42 | low-resolution quantization means |
| 44 | output means |
| 50 | branch |
| 128 | phase difference estimator |
| 130 | reference signal |
| 132 | multiplication means |
| 134 | phase shifted signal |
| 136 | subtraction means |
| 138 | subtracted signal |
| 140 | dual-resolution quantization means |
| 142 | low-resolution quantization means |
| 150 | first branch |
| 152 | further branch |

**Claims**

1. A method for compressing signal dynamic range of a radio frequency (RF) signal that includes a desired signal and an interference signal, the method comprising:

   a) receiving the RF signal (16) with at least one antenna element (14), each antenna element (14) outputting a received signal, wherein a reference signal is based on the received signal;

   b) sampling the received signal to obtain a plurality of samples $(y_{m,n})$ for each antenna element (14), wherein each sample $(y_{m,n})$ is associated with a sampling epoch $(t_0, t_1, ..., t_n,...)$ and at least one sample is designated a reference signal sample $(y_{m,0})$ of the reference signal (30);

   c) preprocessing the received signal and/or the received signal samples and the reference signal (30) and/or the reference signal sample $(y_{m,0})$ in order to extract ancillary information that is configured to allow at least approximate signal reconstruction of the received signal;

   d) at each sampling epoch $(t_0, t_1, ..., t_n,...)$ subtracting the reference signal sample $(y_{m,0})$ from the received signal sample $(y_{m,n})$ as it is output from each antenna element (14) to obtain a subtracted signal sample $(\Delta y_{m,n})$ of a subtracted signal (38);

   e) re-quantizing the results of step d); optionally

   f) transmitting the output of step e) to a remote processing computer for reconstruction and/or further processing.

2. The method according to claim 1, wherein at least one reference signal sample is

   - an output signal sample of one of the antenna elements (14) measured at the same sampling epoch $(t_0, t_1, ..., t_n,...)$; and/or

   - a combination of output signal samples obtained from the antenna elements (14) measured at the same sampling epoch $(t_0, t_1, ..., t_n,...)$ and/or

   - an output signal sample of the same antenna element (14) measured at a past sampling epoch; and/or

   - a combination of output signal samples obtained from the antenna elements (14) and measured at a past sampling epoch.

3. The method according to any of the preceding claims, wherein before step d):

   - the average phase offset between a dominant interference component of the interference signal (20) included in the reference signal samples and the non-reference signal samples to be compressed is estimated and/or compensated, and the applied average carrier phase offset is transmitted to the remote processing computer as part of the ancillary information for purposes of signal reconstruction; or

   - the temporally varying phase offset between interference components of the interference signal (20) included in the reference signal samples and the non-reference signal samples to be compressed is tracked and/or compensated, and the applied temporally varying carrier phase offset is transmitted to the remote processing computer as part of the ancillary information for purposes of signal reconstruction.

4. The method according to any of the preceding claims, wherein before step d) the received signal is transformed as to convert at least one interference component into baseband by estimating the carrier frequency offset of the dominant interference component and compensating the dominant interference component in the samples, and the applied carrier frequency offset of the dominant interference component is transmitted to the remote processing computer as part of the ancillary information for purposes of signal reconstruction.

5. The method according to any of the preceding claims, wherein before step d) the average amplitude of the dominant interference component of the interference signal (20) included in the reference signal samples is estimated and compensated, and the applied average carrier amplitude of the dominant interferer is transmitted to the remote processing computer as part of the ancillary information for purposes of signal reconstruction.

6. The method according to any of the preceding claims, wherein before step d) the received signal is transformed as to convert at least one interference component into baseband by tracking a time carrier frequency offset of the dominant interference component and compensating the dominant interference component in the samples, and the applied carrier frequency offset of the dominant interference component is transmitted to the remote processing computer at a lower sample rate for purposes of signal reconstruction.

7. The method according to any of the preceding claims, wherein the interference signal (20) is compensated by applying the steps b) to e) successively for neighboring frequency bins covering the total interference bandwidth.

8. The method according to any of the preceding claims, further comprising: g) tracking the power of the difference between two received signals from different antenna elements (14) after compensating the average phase offset for detecting interference using a threshold value for this power.

9. The method according to any of the preceding claims, wherein the reference signal (30) is applied successively in a daisy chain manner with each following sample stream from one antenna serving as reference for the following one.

10. A method for at least approximately reconstructing an RF signal whose signal dynamic range was compressed according to a method according to any of the preceding claims, the method comprising:

a) receiving a compressed signal comprising at least one reference signal sample ($y_{m,0}$), a plurality of subtracted signal samples ($\Delta y_{m,n}$) associated with that reference signal sample ($y_{m,0}$), and ancillary information;
b) for each sampling epoch ($t_0, t_1, ..., t_n, ...$), adding to the reference signal sample ($y_{m,0}$) an accumulated sum of the subtracted signal samples ($\Delta y_{m,n}$) up to the respective sampling epoch ($t_0, t_1, ..., t_n, ...$);
c) outputting the results of step b) as the reconstructed signal.

11. The method according to claim 10, wherein the compressed signal is organized as a plurality of groups of sampling epochs ($t_0, t_1, ..., t_n, ...$), each group comprising one reference signal sample ($y_{m,0}$), as an initial sample, wherein in step b), for each group of sampling epochs ($t_0, t_1, ..., t_n, ...$), the addition is performed based on the respective initial sample and the subtracted signal samples ($\Delta y_{m,n}$) associated with that group.

12. A data processing apparatus comprising means for carrying out a method according to any of the preceding claims.

13. A signal processing circuit or a programmable integrated circuit comprising electronic components that are arranged and/or connected to perform the method according to any of the claims 1 to 11.

14. A computer program comprising instructions which, when the program is executed by a computer cause the computer to carry out the method according to any of the claims 1 to 11.

15. A computer readable medium or a data carrier signal that comprises the computer program according to claim 14.

EP 4 593 295 A1

FIG. 1

FIG. 2

FIG. 3

FIG. 4

Europäisches
Patentamt

European
Patent Office

Office européen
des brevets

# EUROPEAN SEARCH REPORT

**Application Number**

EP 24 15 3510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/421245 A1 (YU WEI [US] ET AL) 28 December 2023 (2023-12-28) * paragraphs [0038], [0072], [0077] * * figures 1A,1B,3 * | 1-15 | INV. H04B1/10 |
| A | US 2023/261693 A1 (DAFESH PHILIP A [US] ET AL) 17 August 2023 (2023-08-17) * paragraphs [0125], [0259] * * figures 3d,3F,5E,5F * * figures 5A,5B,6A * | 1-15 | |

**TECHNICAL FIELDS SEARCHED (IPC)**

H04B

The present search report has been drawn up for all claims

| Place of search | Date of completion of the search | Examiner |
|---|---|---|
| Munich | 11 June 2024 | Avilés Martínez, L |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 3510

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2024

| Patent document cited in search report | | Publication date | Patent family member(s) | | Publication date |
|---|---|---|---|---|---|
| US 2023421245 | A1 | 28-12-2023 | AU | 2021359896 A1 | 25-05-2023 |
| | | | AU | 2021362005 A1 | 01-06-2023 |
| | | | BR | 112022026622 A2 | 09-05-2023 |
| | | | BR | 112022026626 A2 | 09-05-2023 |
| | | | CA | 3185094 A1 | 21-04-2022 |
| | | | CA | 3186518 A1 | 21-04-2022 |
| | | | CN | 116134754 A | 16-05-2023 |
| | | | CN | 116210170 A | 02-06-2023 |
| | | | EP | 4229842 A1 | 23-08-2023 |
| | | | EP | 4229844 A1 | 23-08-2023 |
| | | | US | 2022123770 A1 | 21-04-2022 |
| | | | US | 2022123828 A1 | 21-04-2022 |
| | | | US | 2023421245 A1 | 28-12-2023 |
| | | | WO | 2022082202 A1 | 21-04-2022 |
| | | | WO | 2022082211 A1 | 21-04-2022 |
| US 2023261693 | A1 | 17-08-2023 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6807405 B1
- US 6426983 B1
- US 6215812 B1
- US 6020783 A
- US 5719852 A
- US 5596600 A
- US 4991165 A
- US 5325204 A
- US 5027123 A
- US 5051963 A
- US 4589083 A
- US 3967102 A
- US 5058139 A
- US 5263048 A
- US 4287475 A
- US 8725784 B2
- US 8259003 B2
- US 9998190 B2
- US 8150345 B2
- US 9509427 B2
- US 10348474 B2
- US 10057001 B2
- US 8254845 B2
- US 5384598 A
- US 4858004 A
- US 5764294 A
- US 5343539 A
- US 8238677 B2
- US 20030099397 A1
- US 6215825 B1
- US 8818102 B2
- US 5490221 A

### Non-patent literature cited in the description

- **LIU, YAOHUI ; DINIZ, PAULO ; LAAKSO, TIMO**. *Adaptive Steiglitz-McBride notch filter design for radio interference suppression in VDSL systems*, 2001, vol. 1, 359-363
- **A. NEHORAI**. A minimal parameter adaptive notch filter with constrained poles and zeros. *IEEE Trans.on ASSP*, 1985, vol. ASSP-33 (4), 983-996
- **N. HADASCHIK ; G. ASCHEID**. Deriving a Joint Interference Detection and Channel Estimation for WB-OFDM from EM-MAP Theory. *2008 IEEE International Conference on Communications*, 2008, 1322-1327
- **CHANG, WENGE ; LI, JIANYANG ; LI, XIANGYANG**. *The Effect of Notch Filter on RFI Suppression. Wireless Sensor Network*, 2009, vol. 1, 196-205
- **R. T. LORD ; M. R. INGGS**. Efficient RFI suppression in SAR using LMS adaptive filter integrated with range/ Doppler algorithm. *Electronics Letters*, 15 April 1999, vol. 35 (8), 629-630
- **EL GEBALI, A ; LANDRY, R.J**. Single and Multiple Continuous-Wave Interference Suppression Using Adaptive IIR Notch Filters Based on Direct-Form Structure in a QPSK Communication System. *Appl. Sci*, 2022, vol. 12, 2186, https://doi.org/10.3390/app12042186
- **NUNZIA GIORGIA FERRARA ; MOHAMMAD ZAHIDUL H. BHUIYAN ; STEFAN SÖDERHOLM ; LAURA RUOTSALAINEN ; HEIDI KUUSNIEMI**. A new implementation of narrowband interference detection, characterization, and mitigation technique for a software-defined multi-GNSS receiver. *GNSS Solutions*, 2018, vol. 22
- **V. L. DO ; T. B. NGUYEN ; V. K. DAO ; C. H. NGUYEN**. Compression of wideband IQ samples using linear predictive coding and frame of reference. *2017 IEEE 2nd International Conference on Signal and Image Processing (ICSIP), Singapore*, 2017, 371-375
- **M. P. FITZ**. Planar filtered techniques for burst mode carrier synchronization. *Proc. of IEEE GLOBECOM '91, Phoenix, AZ*, 1991
- **M. LUISE ; R. REGGIANNINI**. Carrier frequency recovery in all-digital modems for burst-mode transmissions. *IEEE Trans. on Communications*, 1995, vol. 43 (2/3/4), 1169-1178
- **U. MENGALI ; M. MORELLI.** Data-aided frequency estimation for burst digital transmission. *IEEE Transactions on Communications*, 1997, vol. 45, 23-25